# FASCICULE DE BREVET EUROPEEN

(11) **EP 2 257 925 B1**
(45) Date de publication et mention de la délivrance du brevet: **07.07.2021**
(21) Numéro de dépôt: 09711215.5
(22) Date de dépôt: 12.02.2009
(51) Int. Cl.: G06Q 30/02

(54) **PROCEDE POUR DETERMINER UN TAUX DE TRANSFORMATION LOCAL D'UN OBJET D'INTERÊT**
VERFAHREN ZUR BESTIMMUNG EINES LOKALEN UMSATZFAKTORS EINES OBJEKTS
METHOD FOR DETERMINING A LOCAL RATE OF TRANSFORMATION OF AN OBJECT OF INTEREST

(30) Priorité: 12.02.2008 FR 0850872
(43) Date de publication de la demande: 08.12.2010
(73) Titulaire: Cliris, 92200 Neuilly Sur Seine (FR); Zeller, Alexandre, 92200 Neuilly Sur Seine (FR)
(72) Inventeur: ZELLER, Alexandre, F-92200 Neuilly Sur Seine (FR); REVUE, Alexandre, F-75005 Paris (FR)
(74) Mandataire: IP Trust
(86) Numéro de dépôt international: PCT/FR2009/050223
(87) Numéro de publication internationale: WO 2009/101363

(56) Documents cités:
- WO-A-2006/097680
- WO-A-2008/008505
- US-A1- 2003 039 379
- US-B1- 6 967 674
- TAO ZHAO ET AL: "Segmentation and Tracking of Multiple Humans in Crowded Environments" 1 juillet 2008 (2008-07-01), IEEE TRANSACTIONS ON PATTERN ANALYSIS AND MACHINE INTELLIGENCE, IEEE SERVICE CENTER, LOS ALAMITOS, CA, US, PAGE(S) 1198 - 1211 , XP011224157 ISSN: 0162-8828 page 1198 - page 1205
- ASPROM: "3e rencontre des start-up des télécoms et du multimedia, issues des grandes écoles"[Online] 8 novembre 2006 (2006-11-08), pages 1-6, XP002500065 Extrait de l'Internet: URL:http://aist.enst.fr/docs/0610241240ASP ROM.pdf> [extrait le 2008-10-16]
- CLIRIS: "Marketing beharioural analysis solution"[Online] 5 octobre 2007 (2007-10-05), pages 1-4, XP002500066 Extrait de l'Internet: URL:http://web.archive.org/web/20071005083 215/www.cliris.net/benefices-frequentation .shtml> [extrait le 2008-10-16] & [Online] 5 octobre 2007 (2007-10-05), Extrait de l'Internet: URL:http://web.archive.org/web/20071005045 531/www.cliris.net/benefices-parcours.shtm l> [extrait le 2008-10-16] & [Online] 5 octobre 2007 (2007-10-05), Extrait de l'Internet: URL:http://web.archive.org/web/20071005130 852/www.cliris.net/benefices-interet.shtml > [extrait le 2008-10-16] & [Online] 5 octobre 2007 (2007-10-05), Extrait de l'Internet: URL:http://web.archive.org/web/20071005130 959/www.cliris.net/benefices-segment.shtml > [extrait le 2008-10-16]
- CAMILO CHANG D'OREA: "Hierarchical Partition-Based Representations of Motion-Coherent Regions For Video Object Segmentation"[Online] mai 2007 (2007-05), pages 7-25, XP002500067 Department of Signal Theory and Communications - Technical University of Catalonia Extrait de l'Internet: URL:http://gps-tsc.upc.es/imatge/_Camilo/t hesis/thesis.pdf> [extrait le 2008-10-16]
- VIDEOMINING CORPORATION: "Test Store Platform for retail strategy"[Online] 2006, pages 1-4, XP002500068 Extrait de l'Internet: URL:http://www.ipcctvcameras.co.uk/pdf/VMO verview.pdf> [extrait le 2008-10-16]
- TAO ZHAO ET AL: "Segmentation and Tracking of Multiple Humans in Crowded Environments", IEEE TRANSACTIONS ON PATTERN ANALYSIS AND MACHINE INTELLIGENCE, IEEE COMPUTER SOCIETY, USA, vol. 30, no. 7 31 August 2007 (2007-08-31), pages 1198-1211, XP011202125, ISSN: 0162-8828, DOI: 10.1109/TPAMI.2007.70770 [retrieved on 2007-08-31]

## Description

La présente invention se rapporte à un procédé pour déterminer un taux de transformation local d'un objet d'intérêt présent dans une zone d'observation, dans lequel procédé on acquiert une pluralité d'images de la zone d'observation au moyen d'une caméra. Elle trouve une application particulièrement intéressante mais non limitative dans le domaine de l'analyse comportementale par vision artificielle. Plus précisément, la présente invention peut s'appliquer à des systèmes dans lesquels on dispose d'au moins une caméra disposée en hauteur dans un endroit stratégique d'un magasin où l'on est capable de visualiser des déplacements de personnes. Le flux vidéo de la caméra est traité de façon notamment à réaliser des analyses comportementales.

Un but de la présente invention est d'améliorer la disposition d'objets dans les rayons d'un magasin. La présente invention a aussi pour but un nouvel outil d'analyse comportementale. Un autre but de l'invention est un procédé pour estimer un taux de transformation d'un produit de manière précise et locale.

On connaît en outre le document Thao Zhao et al, « Segmentation and Tracking of Multiple Humans in Crowded Environments », IEEE Transactions on Pattern Analysis and machine intelligence, p. 1198-1211, décrivant une modélisation complexe du problème cherchant à résoudre simultanément la problématique d'apprentissage de fond, de détection/dénombrement de personnes, et d'appariement/suivi, cela par une estimation continue d'une fonction de vraisemblance globale. La génération de nouvelles cibles dans rapproche de ce document se fait à partir de trois critères : deux de détection de têtes, un de résidu de zone en mouvement.

On atteint au moins l'un des buts précités avec un procédé pour analyser le comportement d'individus en déplacement dans une zone d'observation tel que définit par la revendication 1. Un objet d'intérêt peut être physiquement présent ou simplement représenté, par exemple sous forme d'une image, d'un panneau publicitaire,... Dans ce procédé, on acquiert une pluralité d'images de la zone d'observation au moyen d'une caméra.

La revendication 1 concerne un procédé pour analyser le comportement d'individus en déplacement dans une zone d'observation comprenant un objet d'intérêt, dans lequel procédé on acquiert une pluralité d'images de la zone d'observation au moyen d'une caméra, comprenant, pour chaque image acquise, on réalise les étapes suivantes : - extraction d'un fond fixe de l'image, - une étape a) de détection de zones de pixels « blobs » se détachant du fond fixe de l'image, - une étape b) de détection des individus, dans laquelle : b1) pour chaque blob, on génère plusieurs hypothèses de positions possibles au sein d'un modèle tridimensionnel de la zone d'observation en utilisant les caractéristiques de la caméra et une taille standard d'individu ; et pour chaque position possible, on détecte point visible d'un individu en appliquant un modèle tridimensionnel d'individu sur le blob correspondant, b2) dénombrement des individus pour chaque blob, c) pour chaque individu détecté, détermination des surfaces élémentaires occupées par cet individu, caractérisé en ce que ladite étape b) de détection des individus comporte en outre un traitement dudit point visible d'un individu pour établir la cohérence entre des positions de tête et de pied consistant à : - établir une correspondance entre des pixels de l'image et des points de l'espace correspondant, - considérer que les pixels d'un blob correspondant à un point visible d'un individu correspondent potentiellement à ses pieds ou à sa tête, et - réaliser une projection de ces pixels sur les plans du sol et des plans placés à hauteur standard de tête, la zone commune de projection des pieds et de la tête étant identifiée comme une position possible.

A titre d'exemple non limitatif, l'objet d'intérêt peut être :
- un outil de communication tel qu'un écran plasma, un élément d'affichage quelconque...placé dans un lieu fermé comme un magasin ou non (à l'extérieur) ;
- une vitrine de présentation de produit, en interne ou en externe ;
- l'entrée d'un espace tel qu'un magasin : une valeur d'intérêt pouvant alors être le nombre de personnes ayant franchi une porte d'entrée.

Avantageusement, lorsque plusieurs objets d'intérêt sont disponibles dans la zone d'observation ou ailleurs, cette valeur d'intérêt peut également être le nombre d'objets d'intérêt ayant été détectés par un appareil de détection de sortie d'objets d'intérêt. Avantageusement cet appareil de détection peut être un lecteur infrarouge présent dans les caissiers de magasins et relié à un serveur de gestion de stock par exemple. En fait, dans ce cas, la valeur d'intérêt représente le nombre d'objets d'intérêt vendus par le magasin dans l'intervalle de temps donné.

On peut aussi imaginer la détermination du rapport entre le nombre d'individus dont la trajectoire présente un temps d'arrêt de durée prédéterminée devant l'objet d'intérêt et le nombre d'objets d'intérêt ayant été détectés par l'appareil de détection de sortie d'objets d'intérêt.

La présente invention est notamment basée sur un processus de suivi de déplacements d'individus dans la zone d'observation. Le processus de suivi fait intervenir une détection d'individus image par image. Plus deux détections sont proches, plus elles sont susceptibles de correspondre à un même individu. Ainsi la trajectoire d'un individu est formée par un ensemble de positions déterminées à travers des images successives et appariées ensemble selon le critère de la minimisation globale.

Selon une caractéristique avantageuse de l'invention, la minimisation de la distance globale consiste à réaliser les étapes suivantes : pour chaque position d'individu déterminée, on évalue la distance par rapport aux autres positions d'individus, définissant ainsi une matrice de distances que l'on convertit en matrice de similitudes, puis on normalise des vecteurs propres de cette matrice de similitudes. En d'autres termes, on réalise en fait une méthode à base de décomposition en valeurs singulières. La normalisation des vecteurs propres de cette matrice de similitudes permet d'identifier le meilleur appariement global de l'ensemble des positions.

Selon l'invention, la distance entre deux positions est définie en prenant en compte :
- une distance géométrique 3D : chaque position est identifiée dans un repère 3D fixe, il est donc possible d'évaluer la distance en mètres séparant deux positions ;
- une distance géométrique 2D avec prise en compte de recouvrement : chaque position est identifiée dans le plan de l'image, il est donc possible d'évaluer la distance en pixels séparant deux positions dans cette représentation, on peut notamment utiliser la distance dite de Hausdorf, et/ou utiliser des critères de recouvrement de positions ;
- une distance colorimétrique : pour chaque position, il est possible d'établir une signature à partir de ses histogrammes de couleur ; la mesure de corrélation entre les signatures de deux positions permet d'en déduire une distance d'apparence des deux positions ;
- une cohérence temporelle : la date de détection de deux positions peut être intégrée dans la mesure de distance pour apparier de préférence deux positons proches dans le temps.

L'invention est notamment remarquable par le fait qu'on effectue un appariement global sur l'ensemble des individus détectées, en utilisant des notions riches de distance entre individus pouvant être basées sur des notions de position géométrique, dimensions, signature d'apparence, cohérence temporelle, ...
- Selon une caractéristique avantageuse de l'invention, l'étape b1) de détection d'une tête d'individu s'effectue par analyse de contours.

Selon une première variante, l'étape de détection de têtes comprend les étapes suivantes :
- application d'un filtre de Canny sur l'image par rapport aux zones de pixels de façon à générer une image de contours des zones de pixels,
- application d'une transformée en distance de façon à élaborer une carte de distances,
- réalisation d'une convolution entre la carte de distance et un modèle de tête (« template ») de façon à obtenir une carte de convolution, et
- application d'un algorithme de ligne de partage des eaux (« watershed ») de façon à détecter des têtes d'individus.

L'utilisation d'algorithme de ligne de partage des eaux pour la détection de têtes d'individus permet d'obtenir les positions les plus probables de têtes dans l'image sans avoir recours à des valeurs arbitraires (notamment de valeurs de seuils) ce qui limite les risques de non détection et garantit l'unicité d'une solution locale.

Selon l'invention, l'étape b1) de détection d'une tête d'individu s'effectue par détermination de cohérences entre des positions de tête et de pied. Pour ce faire :
- on établit une correspondance entre des pixels de l'image et des points de l'espace correspondant,
- on considère que les pixels d'un blob correspondent à un point visible d'un individu et potentiellement à ses pieds ou à sa tête, et
- on réalise une projection de ces pixels sur les plans du sol et des plans placés à hauteur standard de tête, la zone commune de projection des pieds et de la tête étant identifiée comme une position possible.

Avantageusement, le dénombrement consiste à identifier simultanément le nombre d'individus présents et leur position respective. En d'autres termes, on réalise une segmentation de groupes. En effet, dans la plupart des circonstances, les images proviennent d'une caméra ayant parfois un angle de visée oblique par rapport au sol, provoquant ainsi de nombreuses situations d'occlusion entre individus, il est alors difficile d'utiliser une recherche individu par individu. Pour cela, la présente invention propose donc une solution cherchant à détecter et dénombrer un groupe (identification simultanée du nombre de personnes présentes et de leur position respective), et non à détecter chaque individu séparément.

Selon une caractéristique de l'invention, l'identification des individus est effectuée à partir d'un modèle d'apparence à trois ellipses imitant un individu.

Ce modèle d'apparence est optimisé selon les critères suivants :
- minimisation du nombre d'individus,
- maximisation du nombre de pixels différents du fond et appartenant aux silhouettes,
- minimisation du nombre de pixels différents du fond et n'appartenant pas aux ellipses,
- minimisation du nombre de pixels appartenant au fond et aux ellipses, et
- minimisation de la distance des contours d'un modèle 2D/3D.

Ensuite, l'optimisation est réalisée au moyen d'un algorithme itératif de descente de gradient.

Selon une caractéristique avantageuse de l'invention, on répartit la convergence de l'algorithme itératif sur des images successives. La convergence de l'algorithme itératif vers un dénombrement optimal des individus peut prendre un temps considérable. Avec la présente invention, on se contente d'une solution partielle approchée sur une image au moment de passer à l'image suivante; cette solution approchée servant de point de départ pour l'image suivante.

Selon une variante avantageuse de l'invention, l'étape b) de détection des individus peut comprendre les étapes suivantes :
à partir d'un modèle 3D de la zone d'observation, d'un modèle 3D d'individu, et des caractéristiques liées à l'appareil d'acquisition de la pluralité d'images d'observation, on réalise une projection perspective dans l'image en cours de chaque surface élémentaire de la zone d'observation de façon à obtenir une projection 2D des modèles d'individu ;
on calcule la correspondance des modèles 2D sur chaque zone de pixels de façon à obtenir une carte de densité de probabilité de présence ; et
on réalise une recherche de maxima par l'algorithme de ligne de partage des eaux de façon à déterminer les individus détectés.

De préférence, les caractéristiques de la caméra vidéo comprennent le champ de vision, le positionnement et la distorsion.

D'une façon générale, selon l'invention, l'extraction du fond fixe de l'image est obtenue en moyennant les valeurs des pixels de l'image au cours du temps.

Selon l'invention, pour tenir compte des faibles variations des valeurs des pixels, on peut modéliser la valeur de chaque pixel de fond par une distribution de probabilités. Cette distribution peut être représentée par une gaussienne, ou plus sobrement par une valeur moyenne et deux valeurs min et max.

Par ailleurs, afin de minimiser autant que possible l'influence des objets n'appartenant pas au fond, avant de moyenner les valeurs des pixels de l'image, il est possible d'effectuer une détection instantanée de mouvement par soustraction d'images successives et d'appliquer un seuil afin d'obtenir un masque correspondant aux pixels qui ne seront pas moyennés.

D'autres avantages et caractéristiques de l'invention apparaîtront à l'examen de la description détaillée d'un mode de mise en œuvre nullement limitatif, et des dessins annexés, sur lesquels :
La figure 1 est une vue schématique générale d'un exemple de mise en œuvre du procédé selon l'invention,
La figure 2 est une vue schématique illustrant le positionnement de plusieurs individus à deux instants différents,
La figure 3 est une vue schématique illustrant l'appariement des positions de la figure 2,
La figure 4 est une vue générale d'un organigramme illustrant différentes étapes d'un procédé selon l'invention,
Les figures 5 et 6 sont des images provenant d'une caméra de surveillance sans et avec des blobs apparents,
La figure 7 est une vue d'un organigramme détaillé d'un algorithme de détection de têtes d'individus,
La figure 8 illustre un modèle d'apparence à trois ellipses selon l'invention,
La figure 9 est un schéma simplifié illustrant différentes étapes d'une variante d'algorithme de détection d'individus,
La figure 10 est une vue de l'algorithme décrit sur la figure 9,
La figure 11 est un schéma simplifié illustrant la projection des blobs, et
La figure 12 est un schéma simplifié illustrant une zone de correspondance entre des projections de tête et de pied.

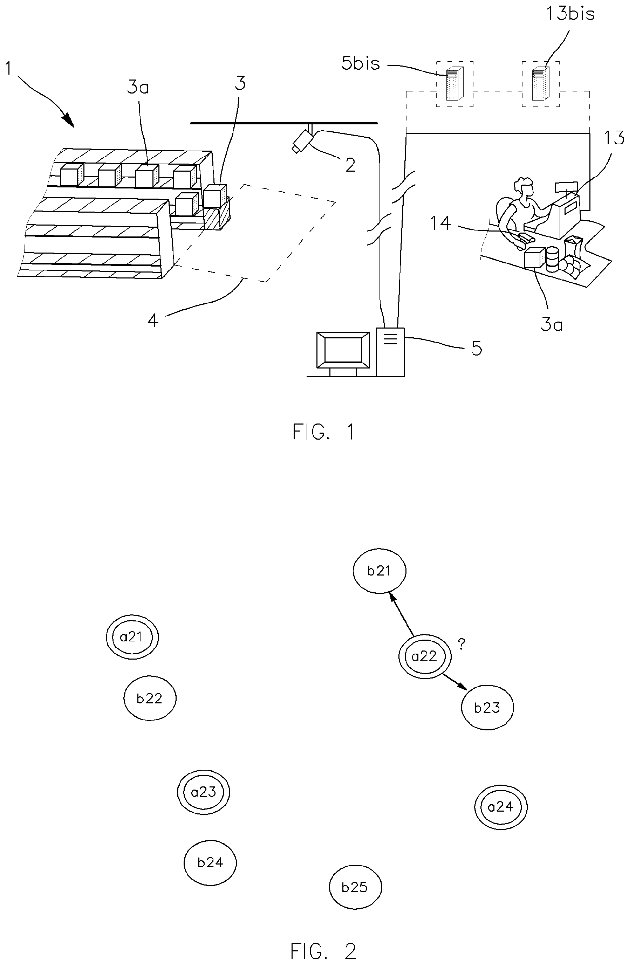

Sur la figure 1 on voit un rayon 1 d'un magasin équipé d'une caméra de surveillance 2 disposée en hauteur. Cette caméra de surveillance est fixée au plafond et est disposée en oblique de façon à filmer un objet d'intérêt 3 dans un endroit stratégique tel qu'un carrefour de plusieurs allées dans le magasin. Cette caméra peut tout aussi bien être disposée ailleurs qu'au plafond. Par exemple, elle peut être disposée en hauteur mais pas forcément au plafond. Sa position n'est pas nécessairement oblique, elle peut être verticale ou autre. On définit une zone d'observation 4 qui est une surface autour de l'objet d'intérêt 3 et comprise dans le champ de vision de la caméra 2. La présente invention a pour but de déterminer un taux de transformation entre le nombre de personnes ayant traversé la zone d'observation et le nombre de personnes ayant acheté ensuite l'objet d'intérêt. Cet objet peut être un produit quelconque dans un magasin. Plusieurs objets d'intérêt 3a peuvent être disposés dans un rayon de magasin à proximité dudit objet d'intérêt 3 placé en exposition.

Sur la figure 1, on voit que la caméra de surveillance 2 est reliée à un serveur distant 5 destiné à mettre en œuvre le procédé selon l'invention. Ce serveur distant 5 peut également être relié à un terminal 13 d'une caisse. D'une façon générale, lorsque le magasin comporte plusieurs caisses, le serveur distant 5 est relié à tous les terminaux de caisse. Le terminal 13 est également relié à un lecteur infrarouge 14 destiné à lire le code de chaque produit acheté. Par ce moyen, le serveur distant 5 peut enregistrer et comptabiliser le nombre produits, notamment d'objets d'intérêt 3a achetés en une journée, une semaine, un mois ou un an par exemple. Selon un autre mode de réalisation, on peut prévoir un serveur 5 relié à une ou plusieurs caméras 2, ce serveur 5 ayant un rôle d'unité de traitement t pour les images provenant des caméras 2. On peut alors prévoir plusieurs serveurs 5, chacun relié à une ou plusieurs caméras d'une part, et également relié à un serveur externe de gestion 5bis. Par ailleurs, plusieurs terminaux de caisses 13 peuvent être reliés à un autre serveur externe 13bis qui peut être spécifiquement dédié au magasin. Le serveur externe 5bis peut se connecter au serveur externe 13bis de façon à récupérer des données afin de déterminer des taux de transformation.

Lorsqu'on souhaite réaliser une analyse comportementale sur un mois par exemple. On place l'objet d'intérêt 3 dans la zone d'observation. On détecte les trajectoires de toute personne traversant la zone d'observation durant ce mois d'analyse. On peut éventuellement isoler de ces trajectoires, celles que l'on considère pertinentes : c'est-à-dire les trajectoires pour lesquels les personnes correspondantes se sont arrêtées par exemple une dizaine de secondes devant l'objet d'intérêt 3. Par exemple, en un mois d'observation, 2500 personnes se sont arrêtées au moins dix secondes devant l'objet d'intérêt 3. Durant la même période, 125 produits 3a se sont vendus dans le magasin. On peut donc en déduire un taux de transformation égal à 2500/125, soit 20. On peut aussi définir plutôt le taux de transformation comme étant le rapport 125/2500, soit 0.05. Dans ce cas le taux de transformation est de 5 pourcent.

On va maintenant décrire le processus de suivi des individus.

Le suivi des individus par la caméra permet d'établir des flux dans la zone d'observation.

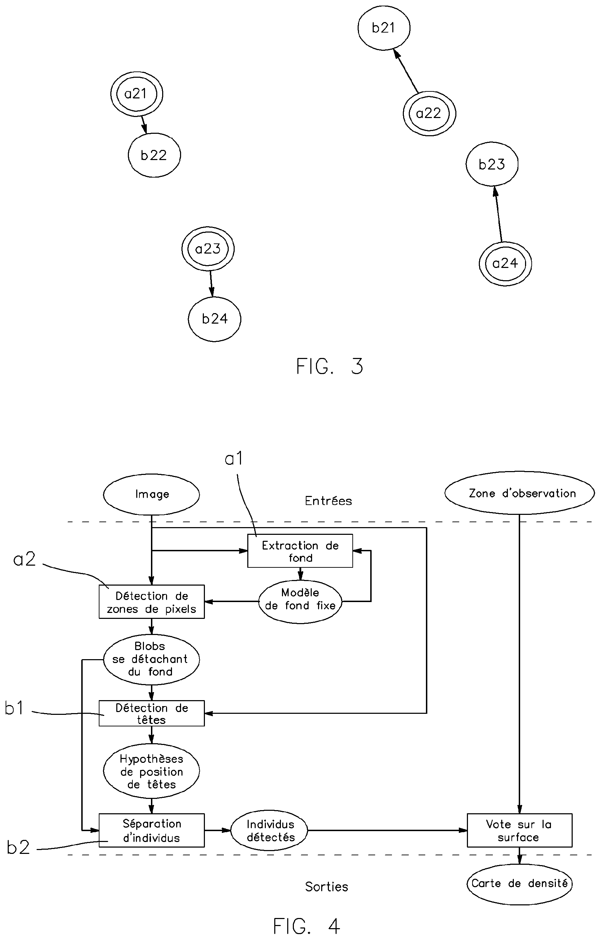

La figure 2 illustre la problématique de l'appariement. On distingue en b21-b25 des positions d'individus pour une image à l'instant t+1, et en a21-a24 des positions d'individus pour une image à l'instant t. On a donc déterminé avec précision la position de chaque individu dans la zone d'observation pour chaque instant. Par exemple pour la position a22, il s'agit de savoir si sa position suivante est la position b21 ou la position b23. Avec le procédé selon l'invention, on réalise une minimisation de la distance globale. En fait on normalise la matrice de correspondance. Sur la figure 3, on voit que l'appariement est optimal par minimisation des distances de façon globale : a22 est apparié à b21, et a24 est apparié à b23.

On va maintenant décrire un peu plus en détail le processus de détection des individus.

Sur la figure 4, on voit un organigramme d'un procédé selon l'invention mis en œuvre dans le serveur distant 5. Cet organigramme a pour entrées une image acquise par la caméra de surveillance 2 et la zone d'observation 4.

A l'étape a1, on extrait le fond de l'image acquise de façon à obtenir un modèle de fond fixe. L'algorithme d'extraction du fond peut être de type itératif sur notamment plusieurs images ou un flux d'image vidéo. L'approche la plus simple pour extraire le fond consiste à moyenner les valeurs des pixels au cours du temps. La contribution à la moyenne d'un objet en mouvement sera d'autant plus faible que son mouvement est rapide par rapport à la cadence des images.

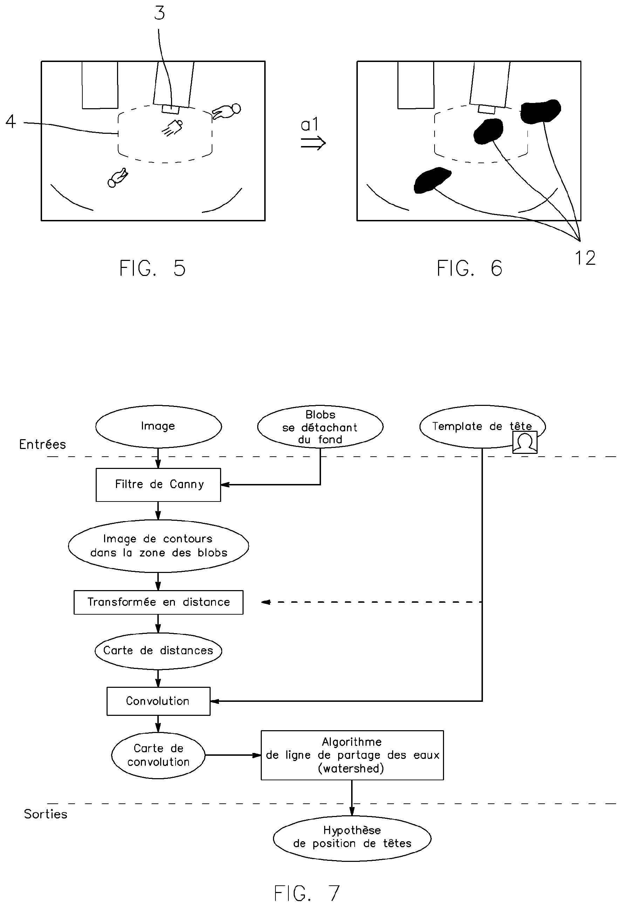

Plus précisément, l'extraction de fond selon l'invention conduit à une modélisation de niveaux de gris, gradients et orientations de gradients moyens et de leurs écarts types. A titre d'exemple, sur la figure 5 on voit une image acquise par la caméra de surveillance 2. On distingue des individus à l'intérieur et hors de la zone d'observation 4 en pointillée. Sur la figure 6, on a réalisé l'étape a1 de sorte que les éléments en mouvements hors fond fixe sont symbolisés par des blobs 12.

A l'étape a2, on réalise une détection de zone en comparant l'image et le fond, et en extrayant des zones de pixels, appelées « blobs », n'appartenant pas au fond.

A l'étape b1, on réalise une détection de l'ensemble des positions possibles de personnes. Cette étape peut être réalisée de deux façons :
- en effectuant une détection de tête par analyse de contours ; pour ce faire on reçoit en entrée les blobs précédemment détectés et ladite image acquise ;
- en recherchant des cohérences entre des positions de tête et de pied. Pour ce faire on reçoit en entrée les blobs précédemment détectés et ladite image acquise.

Le résultat de l'étape b1 est un ensemble d'hypothèses de position de têtes ou d'appariement tête/pied.

Puis, à l'étape b2, on réalise un dénombrement des individus. Plus précisément, on réalise une identification du nombre d'individus dans chaque blob et une estimation de leur position. En fait on élimine les fausses hypothèses de façon à identifier les positions réelles.

En ce qui concerne la méthode de détection de tête.

Sur la figure 7, on voit un peu plus en détail un algorithme de détection de têtes de l'étape b1. En entrée, on distingue l'image acquise, les blobs se détachant du fond, et un modèle de tête appelé « template ». La première étape consiste à appliquer un filtre de Canny pour extraire les contours des têtes d'individus sur l'image acquise de façon à obtenir une image de contours dans la zone des blobs.

Ensuite, on réalise une transformée en distance. Il s'agit d'un calcul d'une carte de distance entre contours. C'est un calcul rapide et stable de la corrélation du « template » de tête avec les contours. La sortie de cette étape est une carte de distances.

Ensuite, on réalise une convolution entre la carte de distances et le « template » de façon à obtenir une carte de convolution. La convolution comprend un calcul de la corrélation du « template » de tête avec les contours.

Enfin, on applique un algorithme de ligne de partage des eaux (« watershed » en langue anglaise) pour localiser et quantifier des maxima de corrélation, et déterminer des maxima de probabilité de présence de têtes dans l'image acquise. On obtient en sortie une hypothèse sur la position des têtes.

En ce qui concerne la méthode de cohérence pied-tête.

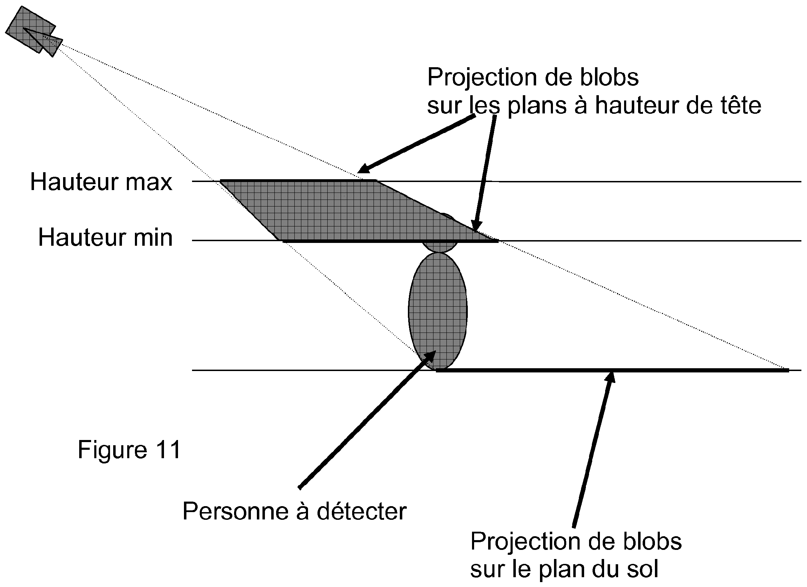

Sur la figure 11, on voit un peu plus en détail un algorithme de recherche de cohérence tête/pied de l'étape b1. En entrée, on considère les blobs se détachant du fond, et la calibration de la caméra permettant d'établir une correspondance entre les pixels de l'image et les points de l'espace leur correspondant.

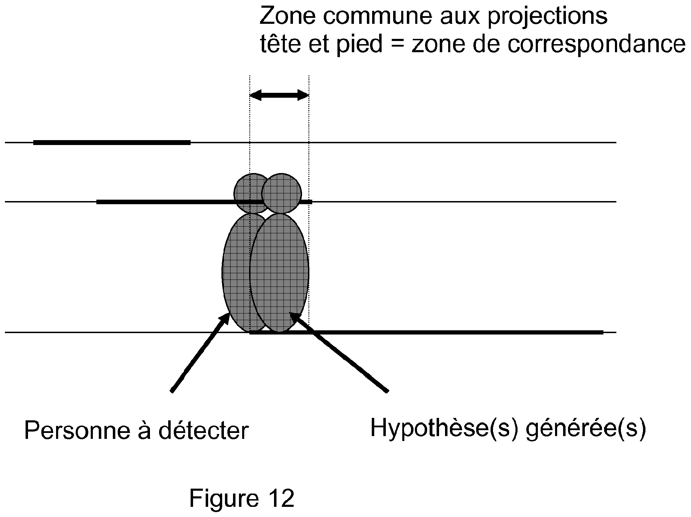

Il est considéré que les pixels d'un blob correspondent à un point visible d'une personne à détecter, et potentiellement à ses pieds ou à sa tête. La projection de ces pixels sur les plans du sol et des plans placés à hauteur standard de tête délimite donc des zones où seraient susceptibles de se trouver des personnes. La conjonction de ces projections, représentée dans la figure 12, permet de réduire ces zones à des espaces localisés, correspondant principalement aux positions réelles envisagées de personnes dans la scène.

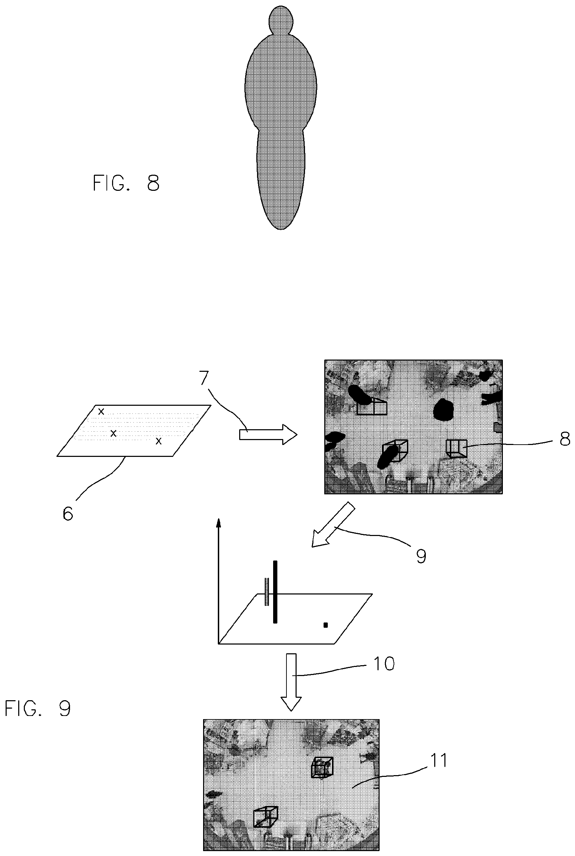

Sur la figure 8, on voit un exemple de modèle d'apparence d'un individu. Ce modèle est utilisé à l'étape b2. En particulier, la détection d'hypothèses de têtes ou de zones de cohérence pied-tête de l'étape b1 génère un grand nombre de fausses détections. Pour aboutir à l'interprétation complète de la scène, on cherche à identifier les individus à partir d'un modèle d'apparence à trois ellipses de la figure 13 (silhouettes pleines), en optimisant les critères suivants :
- minimiser le nombre de personnes,
- maximiser le nombre de pixels différents du fond et appartenant aux silhouettes,
- minimiser le nombre de pixels différents du fond et n'appartenant pas aux silhouettes,
- minimiser le nombre de pixels appartenant au fond et aux silhouettes, et/ou
- minimiser la distance des contours d'un modèle 2D/3D.

La convergence vers la solution optimale s'effectue par des méthodes itératives de type descente de gradient. L'évaluation de cette solution à partir de la superposition des modèles d'apparence permet de gérer naturellement les cas d'occlusion.

La détection selon l'invention a comme particularité de s'effectuer dans le repère tridimensionnel de la surface observée, les caméras étant calibrées avec précision dans cet environnement ; la calibration consiste à estimer avec précision la position et l'orientation de la caméra, ainsi que ses propriétés géométriques intrinsèques telles que focale, champ, distorsions...

Ainsi la position des personnes détectées peut être mise en correspondance avec le plan de la surface analysée, et seuls sont comptabilisés les endroits correspondant à leur position réelle (zone située au niveau de leurs pieds), et non l'ensemble des positions au sol correspondant aux pixels des blobs.

Les personnes détectées (dont les contours sont surlignés) génèrent alors une mesure uniquement à l'endroit correspondant à la position de leurs pieds. Cette mesure peut ainsi être visualisée dans un repère absolu du plan.

Sur la figure 9, on voit un autre exemple de procédé de détection d'individus. On fait l'hypothèse d'une taille standard de personne. La zone d'observation est considérée dans ses coordonnées réelles 3D, une "fenêtre de recherche" 6, en fait un parallélépipède 8 de la taille d'une personne, est déplacé dans cette zone suivant un maillage régulier. Pour chaque position de cette fenêtre de recherche, la projection 7 du parallélépipède dans l'image acquise est calculée, et la vraisemblance de présence d'une personne à cette position est évaluée en fonction du remplissage de ce parallélépipède par des pixels des blobs. Le remplissage est représenté sur le graphe 9.

Cette variante permet donc de gérer la perspective de la scène, ainsi que les défauts de la caméra tels que la distorsion, ce paramètre étant pris en compte dans le calcul de la projection des parallélépipèdes.

Cette variante permet également de prendre en compte le masquage par des objets : si l'on sait qu'une zone correspond à un objet derrière lequel des personnes seraient susceptibles d'être partiellement masquées, l'estimation de la probabilité de présence est corrigée en fonction du nombre de pixels de l'objet masquant situés dans la fenêtre de recherche.

Sur l'image 11 de la figure 9, après lissage, des maxima locaux de vraisemblance sont calculés par une méthode de ligne de partage des eaux sur la vraisemblance inversée; chaque bassin est considéré comme une détection possible.

Afin d'éviter des détections multiples d'un même individu (l'une des détections correspondant à son tronc, et est interprétée comme une personne plus éloignée), les détections obtenues à l'étape précédente sont classées et considérées par ordre croissant de distance les séparant de la caméra de surveillance. On valide les détections de la plus proche à la plus lointaine.

Pour qu'une détection soit validée, on prévoit à ce que le parallélépipède soit rempli par des pixels d'un blob au-delà d'un taux prédéterminé. Chaque détection validée efface du blob les pixels contenus dans son parallélépipède, afin d'éviter les détections multiples.

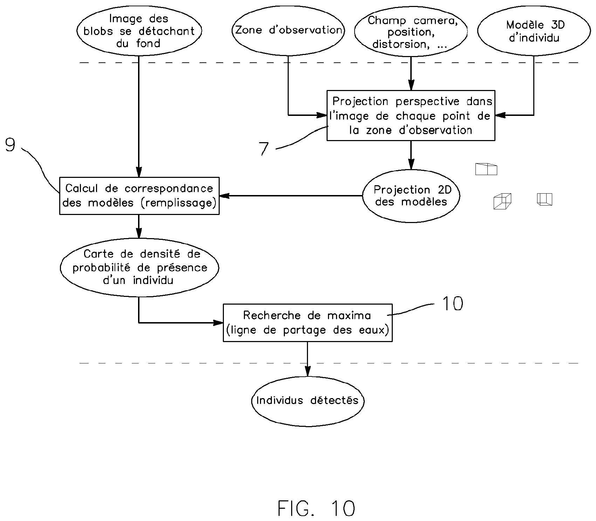

Sur la figure 10, on voit un exemple d'organigramme décrivant cette variante. En entrée, on prend en compte la zone d'observation 3D, les caractéristiques de la caméra de surveillance (champ, position, distorsion,...) et un modèle d'individu, de façon à réaliser la projection perspective 7 de chaque surface élémentaire de la zone d'observation. On obtient un modèle 2D des modèles 3D d'individu. Le calcul 9 de correspondance des modèles (le remplissage) entre une image des blobs et le modèle 2D des modèles permet d'établir une carte de densité de probabilité de présence de chaque individu. En 11, on recherche donc les maxima par ligne de partage des eaux (« watershed ») de façon à obtenir les individus détectés.

La présente invention concerne également une application logicielle ou programme d'ordinateur comprenant des instructions pour exécuter les étapes définies dans un procédé selon l'invention.

L'invention concerne également un moyen de stockage informatique tel qu'un CR-ROM, une clef USB, une mémoire flash... stockant un code de programme d'application qui, lors de son exécution par un processeur numérique, fournit des fonctionnalités telles que définies dans un quelconque procédé selon la présente invention.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour analyser le comportement d'individus en déplacement dans une zone d'observation comprenant un objet d'intérêt, dans lequel procédé on acquiert une pluralité d'images de la zone d'observation au moyen d'une caméra,
comprenant, pour chaque image acquise, on réalise les étapes suivantes :
- extraction d'un fond fixe de l'image,
- une étape a) de détection de zones de pixels « blobs » se détachant du fond fixe de l'image,
- une étape b) de détection des individus, dans laquelle :
b1) pour chaque blob, on génère plusieurs hypothèses de positions possibles au sein d'un modèle tridimensionnel de la zone d'observation en utilisant les caractéristiques de la caméra et une taille standard d'individu ;
et pour chaque position possible, on détecte point visible d'un individu en appliquant un modèle tridimensionnel d'individu sur le blob correspondant,
b2) dénombrement des individus pour chaque blob,
c) pour chaque individu détecté, détermination des surfaces élémentaires occupées par cet individu, **caractérisé en ce que**
ladite étape b) de détection des individus comporte en outre un traitement dudit point visible d'un individu pour établir la cohérence entre des positions de tête et de pied consistant à :
- établir une correspondance entre des pixels de l'image et des points de l'espace correspondant,
- considérer que les pixels d'un blob correspondant à un point visible d'un individu correspondent potentiellement à ses pieds ou à sa tête, et
- réaliser une projection de ces pixels sur les plans du sol et des plans placés à hauteur standard de tête, la zone commune de projection des pieds et de la tête étant identifiée comme une position possible.
le procédé comportant en outre une étape d) de détermination, pour un intervalle de temps donné, de la trajectoire de chaque individu ayant traversé la zone d'observation pour l'ensemble des positions déterminées, par minimisation de la distance globale entre les positions ainsi déterminées dans l'image en cours et des positions déterminées lors d'une image précédente.

2. Procédé selon la revendication 1, **caractérisé en ce qu'**on détermine un taux de transformation comme étant le rapport entre le nombre d'individus dont la trajectoire présente un temps d'arrêt de durée prédéterminée devant l'objet d'intérêt et le nombre d'objets d'intérêt ayant été détectés par l'appareil de détection de sortie d'objets d'intérêt.

3. Procédé selon la revendication 1 ou 2, **caractérisé en ce que** la minimisation de la distance globale consiste à réaliser les étapes suivantes : pour chaque position d'individu déterminée, on évalue la distance par rapport aux autres positions d'individus, définissant ainsi une matrice de distances que l'on convertit en matrice de similitudes, puis on normalise des vecteurs propres de cette matrice de similitudes.

4. Procédé selon l'une quelconque des revendications précédentes, **caractérisé en ce que** la distance entre deux positions est définie en prenant en compte une distance géométrique 3D.

5. Procédé selon l'une quelconque des revendications précédentes, **caractérisé en ce que** la distance entre deux positions est définie en prenant en compte une distance géométrique 2D.

6. Procédé selon l'une quelconque des revendications précédentes, **caractérisé en ce que** la distance entre deux positions est définie en prenant en compte une distance calorimétrique.

7. Procédé selon l'une quelconque des revendications précédentes, **caractérisé en ce que** la distance entre deux positions est définie en prenant en compte une cohérence temporelle.

8. Procédé selon l'une quelconque des revendications précédentes, **caractérisé en ce que** l'étape b1) de détection d'une tête d'individu s'effectue par analyse de contours.

9. Procédé selon la revendication 8, **caractérisé en ce que** l'étape de détection de têtes comprend les étapes suivantes :
- application d'un filtre de Canny sur l'image par rapport aux zones de pixels de façon à générer une image de contours des zones de pixels,
- application d'une transformée en distance de façon à élaborer une carte de distances,
- réalisation d'une convolution entre la carte de distance et un modèle de tête (template) de façon à obtenir une carte de convolution, et
- application d'un algorithme de ligne de partage des eaux (watershed) de façon à détecter des têtes d'individus.

10. Procédé selon l'une quelconque des revendications 1 à 7, **caractérisé en ce que** l'étape b1) de détection d'une tête d'individu s'effectue par détermination de cohérences entre des positions de tête et de pied.

11. Procédé selon l'une quelconque des revendications précédentes, **caractérisé en ce que** le dénombrement consiste à identifier simultanément le nombre d'individus présents et leur position respective.

12. Procédé selon la revendication 11, **caractérisé en ce que** l'identification des individus est effectuée à partir d'un modèle d'apparence à trois ellipses imitant un individu.

13. Procédé selon la revendication 12, **caractérisé en ce que** le modèle d'apparence est optimisé selon les critères suivants :
- minimisation du nombre d'individus,
- maximisation du nombre de pixels différents du fond et appartenant aux silhouettes,
- minimisation du nombre de pixels différents du fond et n'appartenant pas aux ellipses,
- minimisation du nombre de pixels appartenant au fond et aux ellipses, et minimisation de la distance des contours d'un modèle 2D/3D.

14. Procédé selon la revendication 13, **caractérisé en ce que** l'optimisation est réalisée au moyen d'un algorithme itératif de descente de gradient.

15. Procédé selon la revendication 14, **caractérisé en ce qu'**on répartit la convergence de l'algorithme itératif sur plusieurs images successives.

16. Procédé selon l'une quelconque des revendications précédentes, **caractérisé en ce que** les caractéristiques de la caméra vidéo comprennent le champ de vision, le positionnement et la distorsion.

17. Procédé selon l'une quelconque des revendications précédentes, **caractérisé en ce que** l'extraction du fond fixe de l'image est obtenue en moyennant les valeurs des pixels de l'image au cours du temps.

18. Procédé selon la revendication 17, **caractérisé en ce qu'**on modélise la valeur de chaque pixel de fond par une distribution de probabilités.

19. Procédé selon la revendication 17 ou 18, **caractérisé en ce qu'**avant de moyenner les valeurs des pixels de l'image, on réalise une détection instantanée de mouvement par soustraction d'images successives et on applique un seuil afin d'obtenir un masque correspondant aux pixels qui ne seront pas moyennés.

## Patentansprüche

1. Verfahren zum Analysieren des Verhaltens von Personen, die sich in einem Beobachtungsbereich bewegen, die ein interessierendes Objekt umfasst, wobei bei dem Verfahren mehrere Bilder des Beobachtungsbereichs mittels einer Kamera erfasst werden,
umfassend, dass für jedes erfasste Bild die folgenden Schritte ausgeführt werden:
- Extrahieren eines festen Hintergrunds aus dem Bild,
- ein Schritt a) zum Erkennen von Bereichen von "Blob"-Pixeln, die sich vom festen Hintergrund des Bildes lösen,
- ein Schritt b) zum Erkennen von Personen, wobei:
b1) für jeden Blob mehrere Hypothesen möglicher Positionen innerhalb eines dreidimensionalen Modells des Beobachtungsbereichs unter Verwendung der Eigenschaften der Kamera und einer Standardgröße der Person erzeugt werden;
und für jede mögliche Position ein sichtbarer Punkt einer Person erkannt wird, indem ein dreidimensionales Modell einer Person auf den entsprechenden Blob angewendet wird,
b2) Zählung der Personen für jeden Blob,
c) für jede erkannte Person eine Bestimmung der von dieser Person eingenommenen Elementarflächen, **dadurch gekennzeichnet, dass**
der Schritt b) zum Erkennen von Personen ferner ein Verarbeiten des sichtbaren Punktes einer Person umfasst, um eine Kohärenz zwischen einer Kopf- und einer Fußposition herzustellen, bestehend aus:
- Herstellen einer Entsprechung zwischen Pixeln des Bildes und Punkten im entsprechenden Raum, Berücksichtigen, dass die Pixel eines Blobs, die einem sichtbaren Punkt einer Person entsprechen, möglicherweise ihren Füßen oder ihrem Kopf entsprechen und
- Ausführen einer Projektion dieser Pixel auf die Grundebenen und Ebenen, die auf Standardkopfhöhe platziert sind, wobei der gemeinsame Projektionsbereich der Füße und des Kopfes als mögliche Position identifiziert wird.
wobei das Verfahren ferner einen Schritt d) zum Bestimmen des Wegs jeder Person umfasst, die den Beobachtungsbereich für die Ansammlung an bestimmten Positionen durchquert hat, für ein gegebenes Zeitintervall, indem der Gesamtabstand zwischen den so im aktuellen Bild bestimmten Positionen und den bestimmten Positionen in einem vorherigen Bild minimiert wird.

2. Verfahren nach Anspruch 1, **dadurch gekennzeichnet, dass** eine Transformationsrate als das Verhältnis zwischen der Anzahl von Personen, deren Weg eine Verweilzeit von vorbestimmter Dauer vor dem interessierenden Objekt aufweist, und der Anzahl von interessierenden Objekten, die durch die Erfassungsvorrichtung am Ausgang der interessierenden Objekte erfasst wurden, bestimmt wird.

3. Verfahren nach Anspruch 1 oder 2, **dadurch gekennzeichnet, dass** die Minimierung der Gesamtentfernung darin besteht, die folgenden Schritte auszuführen: Für jede bestimmte Position der Person wird die Entfernung in Bezug auf die anderen Positionen von Personen bewertet, wobei so eine Matrix von Abständen definiert wird, die man in eine Ähnlichkeitsmatrix umwandelt, danach normalisiert man die Eigenvektoren dieser Ähnlichkeitsmatrix.

4. Verfahren nach einem der vorhergehenden Ansprüche, **dadurch gekennzeichnet, dass** der Abstand zwischen zwei Positionen unter Berücksichtigung eines geometrischen 3D-Abstands definiert wird.

5. Verfahren nach einem der vorhergehenden Ansprüche, **dadurch gekennzeichnet, dass** der Abstand zwischen zwei Positionen durch Berücksichtigung eines geometrischen 2D-Abstands definiert wird.

6. Verfahren nach einem der vorhergehenden Ansprüche, **dadurch gekennzeichnet, dass** der Abstand zwischen zwei Positionen unter Berücksichtigung eines kalorimetrischen Abstands definiert wird.

7. Verfahren nach einem der vorhergehenden Ansprüche, **dadurch gekennzeichnet, dass** der Abstand zwischen zwei Positionen unter Berücksichtigung einer zeitlichen Kohärenz definiert wird.

8. Verfahren nach einem der vorhergehenden Ansprüche, **dadurch gekennzeichnet, dass** Schritt b1) zum Erkennen des Kopfes einer Person durch Konturanalyse durchgeführt wird.

9. Verfahren nach Anspruch 8, **dadurch gekennzeichnet, dass** der Schritt zum Erkennen von Köpfen die folgenden Schritte umfasst:
- Anwendung eines Canny-Algorithmus auf das Bild in Bezug auf die Pixelbereiche, um ein Bild der Konturen der Pixelbereiche zu erzeugen,
- Anwendung einer Abstandstransformation, um eine Abstandskarte zu erstellen,
- Ausführen einer Faltung zwischen der Entfernungskarte und einem Kopfmodell (Schablone), um eine Faltungskarte zu erhalten, und
- Anwendung eines Wasserscheidenalgorithmus (Watershed) zum Erkennen von Köpfen von Personen.

10. Verfahren nach einem der Ansprüche 1 bis 7, **dadurch gekennzeichnet, dass** der Schritt b1) zum Erkennen des Kopfes einer Person durch Bestimmen von Zusammenhängen zwischen einer Kopf- und einer Fußposition durchgeführt wird.

11. Verfahren nach einem der vorhergehenden Ansprüche, **dadurch gekennzeichnet, dass** die Zählung darin besteht, gleichzeitig die Anzahl der anwesenden Personen und ihre jeweilige Position zu identifizieren.

12. Verfahren nach Anspruch 11, **dadurch gekennzeichnet, dass** die Identifizierung der Personen von einem Erscheinungsmodell mit drei Ellipsen durchgeführt wird, das eine Person imitiert.

13. Verfahren nach Anspruch 12, **dadurch gekennzeichnet, dass** das Erscheinungsmodell nach den folgenden Kriterien optimiert wird:
- Minimierung der Anzahl der Personen,
- Maximierung der Anzahl der Pixel, die sich vom Hintergrund unterscheiden und zu den Silhouetten gehören,
- Minimierung der Anzahl der Pixel, die sich vom Hintergrund unterscheiden und nicht zu den Ellipsen gehören,
- Minimierung der Anzahl der zum Hintergrund und zu den Ellipsen gehörenden Pixel und Minimierung des Abstands der Konturen eines 2D/3D-Modells.

14. Verfahren nach Anspruch 13, **dadurch gekennzeichnet, dass** die Optimierung mittels eines iterativen Gradientenabstiegsalgorithmus ausgeführt wird.

15. Verfahren nach Anspruch 14, **dadurch gekennzeichnet, dass** die Konvergenz des iterativen Algorithmus auf mehrere aufeinanderfolgende Bilder verteilt ist.

16. Verfahren nach einem der vorhergehenden Ansprüche, **dadurch gekennzeichnet, dass** die Eigenschaften der Videokamera das Sichtfeld, die Positionierung und die Verzerrung umfassen.

17. Verfahren nach einem der vorhergehenden Ansprüche, **dadurch gekennzeichnet, dass** die Extraktion des festen Hintergrunds des Bildes erhalten wird, indem die Werte der Pixel des Bildes über die Zeit gemittelt werden.

18. Verfahren nach Anspruch 17, **dadurch gekennzeichnet, dass** der Wert jedes Hintergrundpixels durch eine Wahrscheinlichkeitsverteilung modelliert wird.

19. Verfahren nach Anspruch 17 oder 18, **dadurch gekennzeichnet, dass** vordem Mitteln der Werte der Pixel des Bildes eine sofortige Erfassung der Bewegung durch Subtraktion aufeinanderfolgender Bilder ausgeführt wird und ein Schwellenwert angewendet wird, um eine entsprechende Maske für Pixel zu erhalten, die nicht gemittelt werden.

## Claims

1. Method for analyzing the behavior of individuals moving in an observation zone comprising an object of interest, in which method a plurality of images of the observation zone is acquired by means of a camera,
the method comprising, for each image acquired, the following steps:
- extracting a fixed background from the image,
- a step a) of detecting zones of "blob" pixels standing out from the fixed background of the image,
- a step b) of detecting individuals, in which:
b1) for each blob, a plurality of hypotheses of possible positions are generated within a three-dimensional model of the observation zone using the characteristics of the camera and a standard size of individual;
and for each possible position, a visible point of an individual is detected by applying a three-dimensional model of an individual to the corresponding blob,
b2) individuals for each blob are counted,
c) for each individual detected, determining the elementary surfaces occupied by this individual, **characterized in that**
said step b) of detecting individuals further includes processing said visible point of an individual in order to establish coherence between head and foot positions consisting of:
- establishing a correspondence between pixels of the image and points in the corresponding space,
- considering that the pixels of a blob corresponding to a visible point of an individual possibly correspond to the feet or the head, and
- projecting these pixels onto the ground planes and planes placed at standard head height, the common projection zone of the feet and the head being identified as a possible position,
the method further comprising a step d) of determining, for a given time interval, the trajectory of each individual having crossed the observation zone for all the determined positions by minimizing the overall distance between the positions determined in this way in the current image and positions determined in a previous image.

2. Method according to claim 1, **characterized in that** a transformation rate is determined as being the ratio between the number of individuals whose trajectory has a stopping time of predetermined duration in front of the object of interest and the number of objects of interest having been detected by the apparatus for detecting the exit of objects of interest.

3. Method according to either claim 1 or claim 2, **characterized in that** minimizing the overall distance consists in carrying out the following steps: for each determined individual position, the distance is evaluated with respect to the other positions of individuals, thus defining a matrix of distances which is converted into a matrix of similarities, then eigenvectors of this matrix of similarities are normalized.

4. Method according to any of the preceding claims, **characterized in that** the distance between two positions is defined by taking into account a 3D geometric distance.

5. Method according to any of the preceding claims, **characterized in that** the distance between two positions is defined by taking into account a 2D geometric distance.

6. Method according to any of the preceding claims, **characterized in that** the distance between two positions is defined taking into account a calorimetric distance.

7. Method according to any of the preceding claims, **characterized in that** the distance between two positions is defined taking into account a temporal coherence.

8. Method according to any of the preceding claims, **characterized in that** step b1) of detecting an individual's head is carried out by contour analysis.

9. Method according to claim 8, **characterized in that** the step of detecting heads comprises the following steps:
- applying a Canny filter on the image with respect to the pixel zones to generate a contour image of the pixel zones,
- applying a distance transform to produce a distance map,
- carrying out a convolution between the distance map and a head model (template) to obtain a convolution map, and
- applying a watershed algorithm to detect heads of individuals.

10. Method according to any of claims 1 to 7, **characterized in that** step b1) of detecting an individual's head is carried out by determining coherences between head and foot positions.

11. Method according to any of the preceding claims, **characterized in that** the counting consists in simultaneously identifying the number of individuals present and their respective positions.

12. Method according to claim 11, **characterized in that** identification of the individuals is carried out on the basis of an appearance model with three ellipses imitating an individual.

13. Method according to claim 12, **characterized in that** the appearance model is optimized according to the following criteria:
- minimizing the number of individuals,
- maximizing the number of pixels different from the background and belonging to the silhouettes,
- minimizing the number of pixels different from the background and not belonging to the ellipses,
- minimizing the number of pixels belonging to the background and to the ellipses, and minimizing the distance of the contours of a 2D/3D model.

14. Method according to claim 13, **characterized in that** optimization is carried out by means of an iterative gradient descent algorithm.

15. Method according to claim 14, **characterized in that** the convergence of the iterative algorithm is distributed over a plurality of successive images.

16. Method according to any of the preceding claims, **characterized in that** the characteristics of the video camera comprise field of view, positioning and distortion.

17. Method according to any of the preceding claims, **characterized in that** the extraction of the fixed background of the image is obtained by averaging the values of the pixels of the image over time.

18. Method according to claim 17, **characterized in that** the value of each background pixel is modeled by a probability distribution.

19. Method according to either claim 17 or claim 18, **characterized in that** before averaging the values of the pixels of the image, instantaneous detection of movement is carried out by subtracting successive images and a threshold is applied in order to obtain a mask corresponding to pixels which will not be averaged.
